# EUROPEAN PATENT SPECIFICATION

(11) **EP 3 889 486 B1**
(45) Date of publication and mention of the grant of the patent: **29.05.2024**
(21) Application number: 21166813.2
(22) Date of filing: 02.04.2021
(51) Int. Cl.: F16L 37/22, F16L 37/44

(54) **GRABBING MEMBER FOR QUICK-COUPLING SAFETY JOINT**
GREIFELEMENT FÜR SCHNELLKUPPELNDE SICHERHEITSVERBINDUNG
ÉLÉMENT DE PRÉHENSION POUR JOINT DE SÉCURITÉ À COUPLAGE RAPIDE

(30) Priority: 02.04.2020 IT 202000006985
(43) Date of publication of application: 06.10.2021
(73) Proprietor: Pres-Block S.P.A., 10040 Caselette (IT)
(72) Inventor: MONTAGONO, Massimiliano, 10040 CASELETTE (TO) (IT)
(74) Representative: Studio Torta S.p.A.

(56) References cited:
- EP-A1- 1 455 131
- EP-A1- 2 369 214
- DE-A1- 2 741 512
- US-A- 5 240 023

## Description

### CROSS-REFERENCE TO RELATED APPLICATIONS

This patent application claims priority from Italian patent application no. 102020000006985 filed on 02/04/2020.

### TECHNICAL FIELD

The invention relates to a grabbing member for a quick-coupling safety joint, in particular for a joint for medical applications, which is designed to connect, in a fluid-tight manner, two delivery ducts for a pressurised operative fluid, for example compressed air or gas.

### STATE OF THE ART

Quick-coupling joints are known, which are configured to connect two delivery ducts for a pressurised operative fluid to one another in a fluid-tight manner, said joints basically comprising a grabbing member, generally with a substantially cylindrical shape and having a longitudinal axis, which is designed to be connected to a first one of the aforesaid delivery ducts, and a terminal, which also usually has a substantially cylindrical shape and is designed to be connected to a second one of the aforesaid delivery ducts and to be axially coupled inside the grabbing member, in a releasable manner, in a coupling position.

The grabbing member comprises: a hollow main body, which is designed to be connected to the first duct; a valve element, typically a slide valve, which is mounted so as to axially slide inside the main body; a helical spring, which is interposed between the main body and the valve element and is designed to exert an axial force upon the valve element in order to hold it in a first operative closing position, in which it seals the first duct from the outside; and releasable stopping means to constrain the terminal to the grabbing member in the coupling position.

In particular, the terminal, when it is arranged in the coupling position, exerts, upon the valve element, a force that is opposite and predominant relative to the force exerted by the spring and, therefore, holds the valve element in a second operative opening position, in which it opens the fluidic connection between the first and the second duct.

These joints are affected by the following drawback. During the uncoupling phase, the terminal, which is axially pushed by the pressure of the fluid and by the reaction of the spring, tends to detach itself from the grabbing member in an extremely violent manner, with the risk of hitting operators and/or damaging machines or objects standing nearby.

In order to overcome this drawback, quick-coupling joints were manufactured, which are provided with a safety function and in which the grabbing member is provided with first and second releasable stopping means, which are arranged in respective position axially spaced apart from one another.

In particular, the first stopping means are designed to cooperate with the terminal in order to lock it in the coupling position, namely in the position in which it counters the action of the spring and holds the valve element in the second operative opening position, whereas the second stopping means are designed to cooperate with the terminal in order to hold it, following the release of the first stopping means and during the uncoupling from the grabbing member, in a retracted safety position, in which the terminal still is mechanically coupled to the main body and allows the valve element to go back to the first operative closing position, in which is seals the first duct in a fluid-tight manner.

More in detail, following the release of the first coupling means, the terminal, which is axially pushed by the pressure of the fluid, gets separated from the valve element, thus allowing it to go back to the first operative position, and strikes against the second stopping means.

According to a known solution, the second stopping means comprise a plurality of small balls, usually made of steel, which are fixed to the main bod in a given axial position and are equally spaced apart around the longitudinal axis (for example, three balls arranged circumferentially at 120° from one another).

Basically, after the release of the first stopping means, the terminal, which is pushed by the pressure of the fluid, strikes, in the area of a radial protuberance of its, against the balls, which are rigidly kept in the respective axial and radial positions.

EP-A-1455131, in the name of the same Applicant, discloses a quick-coupling joint having a grabbing member of the type described above, the second stopping means of which comprise the aforementioned balls.

The Applicant noticed that the repeated violent hits of the terminal against the second stopping means, said hits necessarily taking place every time the terminal is uncoupled form the grabbing means through a release command, cause a local damaging of the radial striking protuberance of the terminal.

This local damaging determines, even though after a large number of cycles, a high wear of the material making up the terminal and, hence, a decrease in the useful life of the component.

Therefore, the quick-coupling joints of the type described above, despite being functionally valid, can fail to comply with current or future standards in terms of useful duration.

### SUBJECT-MATTER AND SUMMARY OF THE INVENTION

The object of the invention is to provide a grabbing member for a quick-coupling safety joint, which is highly reliable and has a limited cost as well as solves the drawback discussed above relating to known grabbing members.

According to the invention, this object is reached by a grabbing member as claimed in claim 1.

### BRIEF DESCRIPTION OF THE DRAWINGS

The invention will be best understood upon perusal of the following description of a preferred non-limiting embodiment, which is provided by mere way of example, with reference to the accompanying drawings, wherein:
- figure 1 is a perspective, partially sectional view, with parts removed for greater clarity, of a quick-coupling joint comprising a grabbing member according to the invention;
- figures 2 to 5 show, in a sectional view with parts removed for greater clarity, the quick-coupling joint of figure 1 during different and successive operative conditions; and
- figure 6 is a perspective, partially exploded view, with parts removed for greater clarity, of the quick-coupling joint of figure 1.

### DETAILED DESCRIPTION

With reference to the accompanying figures, number 1 indicates, as a whole, a quick-coupling safety joint, in particular a joint for medical applications, to connect, in a fluid-tight manner, two delivery ducts 2, 3 for a pressurised operative fluid, for example compressed air or gas.

The joint 1 has a longitudinal axis A and comprises a grabbing member 4 according to the invention, which has a substantially cylindrical configuration with axis A and is designed to be connected to the duct 2, and a terminal 5, in particular a standard terminal (which is known and is not part of the invention), which also has a substantially cylindrical configuration, is connected to the duct 3 and is designed to be coupled inside the grabbing member 4, in a releasable manner, in a coupling condition.

In particular, the terminal 5, which is only described in order to provide complete information that can help readers understand the features of the grabbing member 4, has a substantially tubular shape and comprises two tubular portions 6, 7 with a different diameter, which are joined to one another. More in particular, the portion 6 is connected to the duct 3, whereas the portion 7 defines a radial protuberance 7 of the terminal 5, which radially projects relative to the portion 6.

The grabbing member 4 basically comprises a tubular main body 8 with axis A, which has a substantially cylindrical conformation and is fixed, for example by means of a threaded coupling, to the duct 2 in the area of an axially open end portion 8a of its.

In detail, the main body 8 is configured to axially receive the terminal 5, so that it can be engaged, through an axially open end portion 8b of its, which is opposite the end portion 8a.

More in detail, the terminal 5 is configured to axially engage the main body 8 until it reaches an advanced coupling position, in which the duct 2 is fluidically connected to the duct 3, in the way described below.

The grabbing member 4 comprises a valve element 10, in particular a slide valve, which is mounted so as to axially slide inside the main body 8, preferably coaxially to the axis A, and is movable between a closed position, in which it seals the duct 2, in a fluid-tight manner, from the surrounding environment, and an open position, in which it allows the pressurised operative fluid to flow out of the duct 2.

To this aim, the grabbing member 4 comprises a helical spring 11 with axis A, which is housed inside the main body 8, in particular is operatively interposed between the main body 8 and the valve element 10, and exerts an axial force upon the valve element 10 in order to hold it in the closed position.

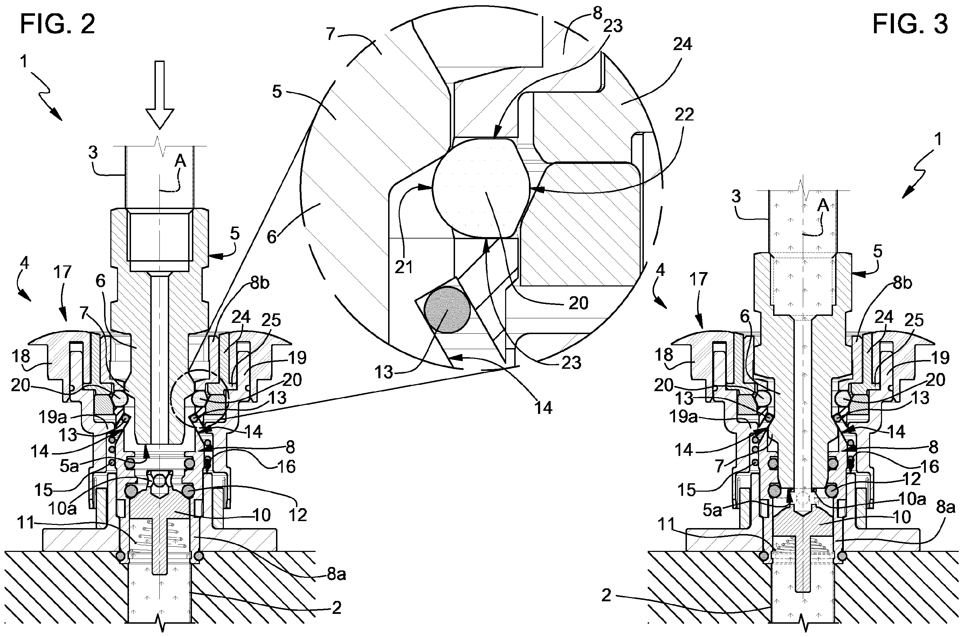

More in particular, as shown for example in figure 2, the spring 11 pushes and holds, in the absence of opposing actions, the valve element 10 against a sealing element 12, for example an o-ring, so as to seal the duct 2 in a fluid-tight manner.

The valve element 10 can be arranged in the open position through the interaction with the terminal 5: in use, the axial insertion of the terminal 5 into the main body 8 in its advanced coupling position (figure 3) determines, through the interaction of an end surface 5a of the terminal 5 with an axial pin 10a of the valve element 10, a force that is opposite and predominant relative to the force exerted by the spring 11 so as to hold the valve element 10 in the open position.

In this way, the terminal 5 arranged in its coupling position determines the opening of the fluidic connection between the duct 2 and the duct 3.

The grabbing member 4 comprises first releasable stopping means 13, which are configured to constrain the terminal 5 in said advanced coupling position inside the main body 8, in which the terminal 5 exerts an opposite and predominant force, relative to the force exerted by the spring 11, upon the valve element in order to keep it in the open position.

According to the preferred and non-limiting embodiment described herein, the first stopping means comprise a pair of bars 13, preferably cylindrical bars, which are arranged in respective transverse through slots 14 obtained in the main body 8 on diametrically opposite sides relative to the axis A and have axes that are parallel to one another and orthogonal to the axis A. The bars 3 can slide in the slots 14 from and to the axis A between:
- a radially extracted position (figures 2 and 3), in which they are suited to interact with the terminal 5, in particular with the radial protuberance 7, in order to create a mechanical coupling between the main body 8 and the terminal 5; and
- a radially retracted position (not shown), in which they allow the terminal 5 to be disengaged from the main body 8.

In the radially extracted position, the bars 13 have respective intermediate portions that partially project into the main body 8 so as to narrow the passage cross section thereof and, hence, define an axial abutment for the radial protuberance 7 of the terminal 5, which constrains the terminal 5 in the advanced coupling position.

To this regard, the bars 13 are arranged at a suitable axial distance from the pin 10a of the valve element 10.

In the radially retracted position, the intermediate portions of the bars 13 are completely housed (retracted) inside the slots 14, thus freeing the passage cross section of the main body 8 and allowing the terminal 5 to be extracted.

In particular, each slot 14 is delimited by relative lateral sides, which are oblique relative to the axis A and parallel to one another.

The bars 13 are axially loaded towards the radially extracted position by a helical spring 15, which is wound around the main body 8 and is interposed between the bars 13 and an outer shoulder 16, which is fixed relative to the main body 8 and to the grabbing member 4.

The bars 13 are conveniently arranged in a position axially upstream of the valve element 10, along the direction of insertion of the terminal 5 into the main body 8.

During the insertion of the terminal 5 into the main body 8, the radial protuberance 7 exerts upon the bars 13 a force that is opposite and predominant relative to the force exerted upon them by the spring 15, and causes them to move from the extracted position to the retracted position.

When the radial protuberance 7 axially moves past the bars 13, the latter, which are loaded by the spring 15, go back from the retracted position to the extracted position, holding the radial portion 7 and, hence, the terminal 5 in the advanced coupling position (figure 3), in which the valve element 10 is in the open position, as explained above.

The grabbing member 4 conveniently comprises a drive assembly 17, preferably a manually-operated one, which is mounted so as to axially slide on the outer surface of the main body 8, is loaded by the spring 15 and is configured to release the first stopping means.

More in detail, the drive assembly 17 can axially be moved to an operative release position, in which it determines the release of the first stopping means.

In other words, the drive assembly 17 can be operated so as to cause the movement of the bars from the extracted position 13 to the retracted position and, hence, to determine the release of the terminal 5 from the advanced coupling position.

In the example described herein, the drive assembly 17 comprises a ring nut 18 with axis A and a tubular sleeve 19 with axis A, which is fixed to the ring nut 18 and is operatively coupled to the spring 15 through a radial projection 19a.

In practice, the spring 15 axially loads the sleeve 19 and, consequently, the ring nut 18 so as to hold them in a rest position, in which the spring 15 further loads the bars 13 in an axial direction.

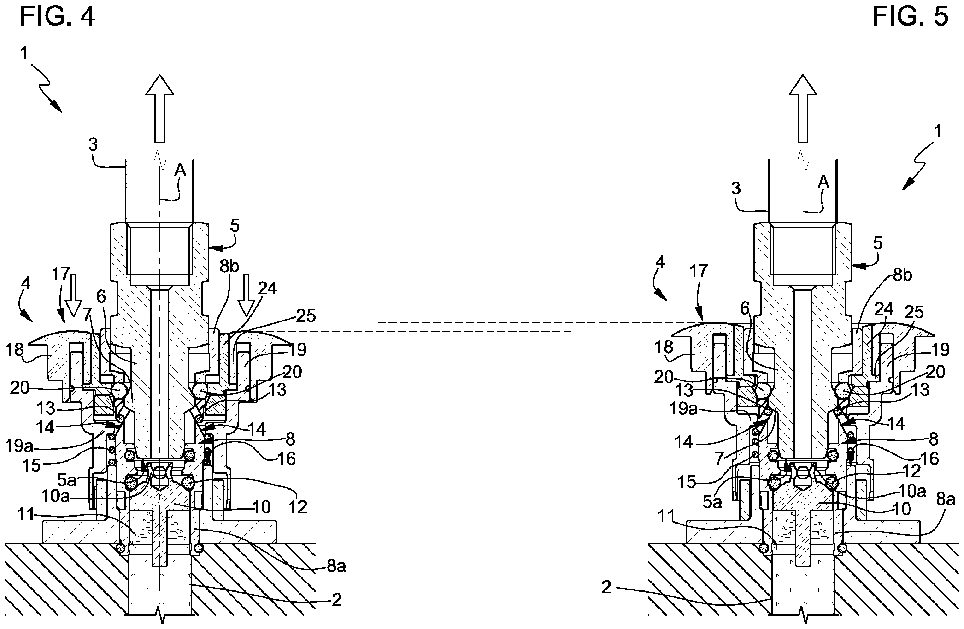

By axially moving the ring nut 18 through pressing, in particular downward in figure 4, an axial movement of the sleeve 19 is caused, in particular downward in figure 4. Following this movement, the action of the spring 15 is overcome and the spring 15 is axially compressed. Hence, the bars 13 are moved from the extracted position to the retracted position in the slots 14, basically cancelling the axial abutment defined by the bars 13 for the radial protuberance 7, which ends up being axially free.

The terminal 5, which is pushed by the action of the spring 11 and by the pressure of the operative fluid acting upon the valve element 10 and for it does no longer strike against the bars 13, gets axially projected, in particular upward in figure 4, and, hence, is removed from its advanced coupling position. The valve element 10 goes back, pushed by the spring 11, to its closed position and the fluidic connection between the duct 2 and the duct 3 is interrupted.

At end of the release of the terminal 5 from the advanced coupling position, the pressure (manually) exerted upon the ring nut 18 can be interrupted. The ring nut 18, at this point, pushed by the spring 15 through the sleeve 19, goes back to its rest position (figure 5).

In order to avoid a violent expulsion of the terminal 5 from the main body 8, the grabbing member 4 comprises second releasable stopping means 20, which are designed to cooperate with the terminal 5 in order to hold it, after the release of the first stopping means 13 and during the uncoupling of the terminal 5 from the main body 8, in a retracted safety position, in which the terminal 5 (still) is mechanically connected to the main body 8 and is separated from the valve element 10 so as to allow the latter to be arranged in the closed position.

This condition is shown in figures 4 and 5.

Advantageously, the second stopping means comprise at least one blocking element 20, which defines an axial abutment for the terminal 5 in the retracted safety position and extends along a circumferential direction around the longitudinal axis A, so as to define an arc-shaped or half-moon shaped profile.

According to the preferred non-limiting embodiment described and shown herein, the second stopping means comprise two blocking elements 20, which are radially opposite one another and are each configured to interact with the terminal 5 in the retracted safety position so as to define an axial abutment for the terminal 5 extending along the circumferential direction around the axis A.

Conveniently, the blocking elements 20 are arranged on a same plane, which is orthogonal to the axis A.

In detail, the blocking elements 20 are axially spaced apart from the bars 13, in particular are arranged axially upstream of the bars 13 relative to the direction of insertion of the terminal 5 into the main body 8.

In other words, the blocking element 20 define an axial safety abutment in addition to the axial coupling abutment defined by the bars 13.

According to an alternative embodiment which is not shown herein, the second stopping means comprise a plurality of blocking elements 20, which, in this case, are angularly equally spaced apart from one another around the axis A.

Thanks to the particular conformation of the blocking elements 20 and, in particular, as a consequence of the fact that they extend along the circumferential direction around the axis A, an extended and non-punctual abutment surface is defined for the terminal 5. Hence, given the same impact force, the local pressure exerted upon the radial protuberance 7 of the terminal 5 is smaller. This leads to a smaller wear of the component and, hence, to an extension of the useful life thereof.

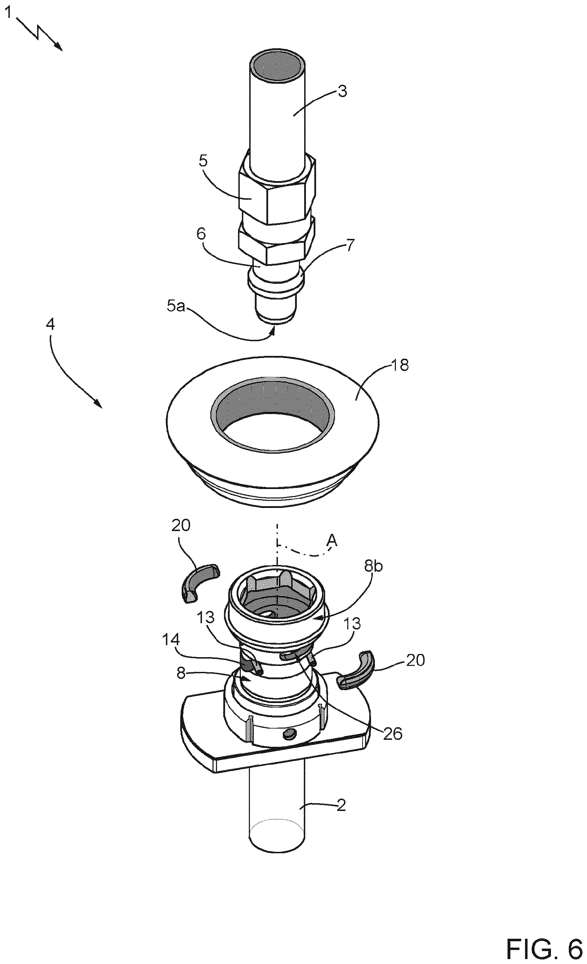

With reference to figure 6, the blocking element 20 according to the invention is defined by an angular toroid portion arranged coaxial to the axis A.

More in detail, the angular toroid portion defining each blocking element 20 has a cross-section, in a radial direction relative to the axis A, having a closed-line perimeter including a first C-shaped portion 21 and a second C-shaped portion 22, which is radially more external than the first portion 21.

The first portion 21 and the second portion 22 are connected to one another at the respective free ends and have respective concavities facing one another in the radial direction.

More precisely, the free end portions of the first portion 21 have an aperture which is different from, in particular smaller than, the aperture of the free end portions of the second portion 22, relative to the axial direction.

More in detail, the first portion 21 substantially has the shape of an ellipsis, whereas the portion 22 comprises, in turn, a central circular arc and two lateral straight segments defining the free end portions of the portion 22 itself.

In addition, the perimeter of the aforesaid cross section further comprises a pair of first straight segments 23, which are axially opposite one another and each join the first portion 21 to the second portion 22 in the area of the free ends thereof, respectively.

The Applicant noticed that this conformation of the blocking element 20 is the one providing the best performances in terms of wear and resistance to the hits caused by the impact of the terminal 5 disengaged by means of the drive assembly 17 from the advanced coupling position to the retracted safety position.

In light of the above, each blocking element 20 identifies, together with the terminal 5 and as long as the terminal 5, namely the radial protuberance 7, strikes against the blocking element 20, a contact area having a profile substantially shaped like an arc of an annulus.

As mentioned above, said contact area, which is more extended compared to a punctual contact area, improves the performances of the terminal 5 and, hence, of the joint 1 in terms of wear and useful life.

According to a further aspect of the invention, the drive assembly 17 arranged in its release position avoids a radial movement of the blocking elements 20 to constrain them, in a striking manner, against the terminal 5, namely against the radial protuberance 7 of the terminal 5, released by the first stopping means 13 in the retracted safety position.

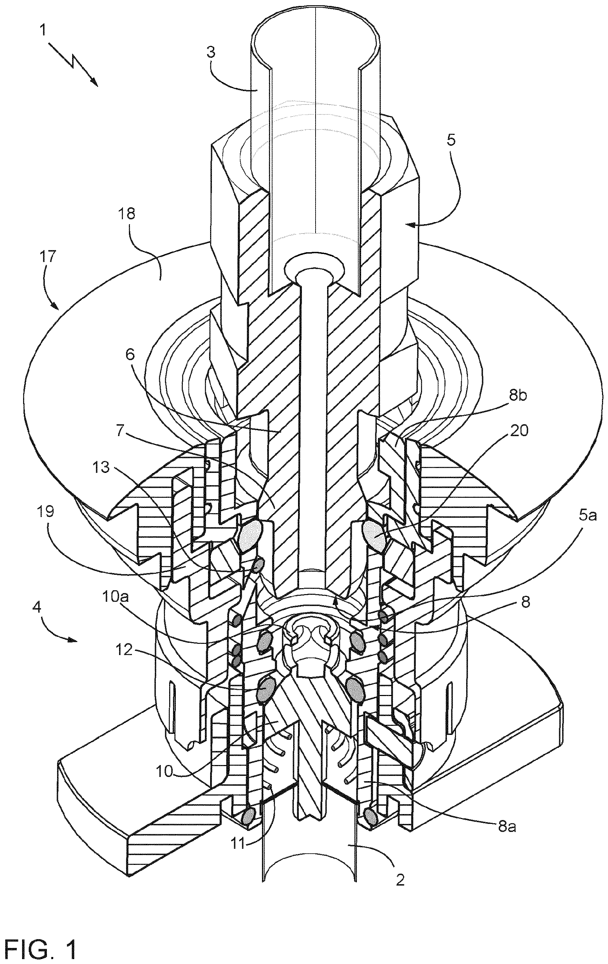

To this aim, the grabbing member 4 comprises a radial shoulder element 24 for the blocking element 20, which can be moved, in particular can axially be moved, between:
- a rest position (figures 1, 2, 3 and 5), in which it enables a radial movement of the blocking element 20 towards a retracted release position, in which it allows the terminal 5 to be uncoupled, in particular extracted, from the main body 8; and
- a shoulder position (figure 4), in which it defines a radial stop for the blocking element 20 so as to constrain it in an advanced abutment position in which it holds the terminal 5 in said retracted safety position, preventing it from being uncoupled, in particular extracted, from the main body 8.

In detail, the shoulder element 24 is defined by a sleeve with axis A, which is operatively coupled to the drive assembly 17.

More in detail, the shoulder element 24 is operatively coupled to the ring nut 18 so that, when the drive assembly 17 is operated, namely when the ring nut 18 is axially moved to the operative rest position, the shoulder element 24 is moved, in particular axially moved, to the shoulder position.

More precisely, the shoulder element 24 comprises a radial projection 25, which is designed to cooperate with, in particular be axially pushed by, the ring nut 18 following an actuation thereof, so as to radially face, in its shoulder position, in particular so as to be in contact with, the second portion 22 of the respective blocking element 20.

In this condition, which is shown in figure 4, a radial outward movement of the blocking elements 20 is forbidden by the presence of the shoulder element 24 as long as the shoulder element 24 is in the shoulder position.

Therefore, simultaneously with the actuation of the drive assembly 17 and, hence, with the release of the first stopping means 13, the second stopping means 20 are held in position, preventing the terminal 5 from violently coming out of the main body 8.

In use, once the pressing action upon the ring nut 18 has ended, the spring 15 pushes the sleeve 19 upward. The sleeve 19 properly acts upon the radial projection 25 of the shoulder element 24, moving the latter back to its rest position (figure 5).

In this condition, the blocking elements 20 are capable of radially moving to the retracted release position following the extraction movement of the terminal 5 and pushed by the radial protuberance 7,, thus allowing the terminal 5 to be completely extracted from the main body 8.

Referring to figure 6, each blocking element 20 is housed in a suitable through slot 26, which is radially obtained in the main body 8.

In particular, the blocking elements 20 are radially movable within the slots 26 during their radial movement between the retracted release position and the advanced abutment position.

In particular, similarly to what happens with the bars 13, in the advanced abutment position, the blocking elements 20 partially engage the tubular body 8 in a radial direction so as to narrow the passage cross section thereof and, hence, define an axial abutment for the radial protuberance 7 of the terminal 5, which holds the terminal 5 in the retracted safety position. In the retracted release position, on the other hand, the blocking elements are completely housed (retracted) inside the slots 26, thus freeing the passage cross section of the main body 8 and allowing the terminal 5 to be extracted.

During the radial movement of each blocking element 20, the respective segments 23 slide on the inner sides of the respective slot 26.

According to another aspect of the invention, each blocking element 20 is made of a plastic material, preferably a polymer, more preferably a thermoplastic polymer.

The Applicant noticed that this material further improves the performances in terms of wear and useful life of the terminal 5, since it at least partially absorbs hit forces, thus reducing the intensity thereof affecting the terminal 5.

The operation of the joint 1 and, in particular, of the grabbing member 4 according to the invention will be described below with particular reference to figures 2 to 5 and to an initial condition, in which the terminal 5 is being inserted into the main body 8 and the radial protuberance 7 is upstream of the blocking elements 20 (figure 2).

In this condition, the terminal 5 is further advanced in an axial direction into the main body 8 and towards the valve element 10, until it reaches the advanced coupling position and determines the opening of the valve element 10 as described above as well as the fluidic connection between the duct 2 and the duct 3.

The terminal 5 is constrained in this position by the bars 13, as shown in figure 3.

In order to interrupt the fluidic connection, operators operate, by pressing the ring nut 18, the drive assembly 17 (figure 4). This causes the movement of the bars 13 from the radially extracted position to the radially retracted position and, hence, the movement of the terminal 5 towards the retracted safety position, in which the terminal 5 is held through axial abutment against the blocking elements 20, which, in turn, are radially locked by the radial shoulder element 24.

When the user releases the ring nut 18, the spring 15 pushes the sleeve 19, the ring nut 18 and the shoulder element 24 upwards and the bars 13 return to the extracted position. The shoulder element 24 goes back to its rest position and enables the radial movement of the blocking elements 20 (figure 5).

The terminal 5 can then be extracted from the main body 8 in a completely safe manner.

The features of the joint 1 and of the grabbing member 4 according to the invention lead to evident advantages that can be obtained using it.

In particular, thanks to the particular conformation of the blocking elements 20 and, more in particular, as a consequence of the fact that they extend along the circumferential direction, an extended and non-punctual abutment surface is defined for the terminal 5. Hence, given the same impact force, the pressure exerted upon the radial protuberance of the terminal 5 is smaller. This leads to a smaller wear of the component and, hence, to an extension of the useful life thereof.

In addition, said useful life is further extended thanks to the fact that the blocking elements 20 are made of a plastic material, preferably a polymer, more preferably a thermoplastic polymer.

Finally, the grabbing member 4 described and shown herein can be subjected to changes and variants, without for this reason going beyond the scope of protection set forth in the appended claims.

## Claims

1. A grabbing member (4) configured to be connected to a first delivery duct (2) for delivering a pressurised operative fluid and to couple in a releasable manner with a terminal (5) of a second delivery duct (3) for delivering said pressurised operative fluid, so as to define a quick-coupling safety joint (1), said grabbing member (4) having a longitudinal axis (A) and comprising:
- a main body (8), substantially tubular, coaxial to the longitudinal axis (A), apt to be connected to said first duct (2) and to axially receive, in releasable coupling, said terminal (5) in an advanced coupling position;
- a valve element (10) axially mounted slidingly inside the main body (8), held by elastic means (11) in a closed position, in which it seals the first duct (2) in a fluid-tight manner from the surrounding environment, and displaceable in an open position, in which it enables the outflow of said pressurised operative fluid from said first duct (2);
- first releasable stopping means (13) configured to constrain the terminal (5) in said advanced coupling position inside the main body (8), in which the terminal (5) exerts a force opposite and predominant with respect to the force exerted by the elastic means (11), on said valve element (10) for keeping it in the open position; and
- second releasable stopping means (20) configured to cooperate with the terminal (5) for holding it, after the release of the first stopping means (13) and during uncoupling of the terminal (5) from the main body (8), in a retracted safety position, in which the terminal (5) is mechanically connected to the main body (8) and is separated from the valve element (10) to enable the arrangement of the valve element (10) in the closed position;
wherein the second stopping means comprise at least one blocking element (20) defining an axial abutment for the terminal (5) in said retracted safety position, **characterised in that** the at least one blocking element (20) extends along a circumferential direction around said longitudinal axis (A) so as to define an arc-shaped or half-moon shaped profile.

2. The grabbing member as claimed in claim 1, wherein said blocking element (20) is defined by an angular toroid portion arranged coaxial to said longitudinal axis (A).

3. The grabbing member as claimed in claim 2, wherein said angular toroid portion has a cross-section, relative to the radial direction, having a closed-line perimeter including a first C-shaped portion (21) and a second C-shaped portion (22) radially more external than the first C-shaped portion (21); the first C-shaped portion (21) and the second C-shaped portion (22) being connected to one another at the respective free ends thereof and having respective concavities facing one another in the radial direction.

4. The grabbing member as claimed in claim 3, wherein the free end portions of the first C-shaped portion (21) have an aperture different from, in particular smaller than, the aperture of the free end portions of the second C-shaped portion (22), with respect to the axial direction.

5. The grabbing member as claimed in any one of the preceding claims, and further comprising drive means (17) displaceable along said longitudinal axis (A) in an operative release position, in which they determine the release of the first stopping means (13) and prevent, at the same time, a radial movement of the blocking element (20) to constrain it in abutment against the terminal (5) released by the first stopping means (13) in the retracted safety position.

6. The grabbing member as claimed in claim 5, and further comprising a radial shoulder element (24) for the blocking element (20) displaceable between:
- a rest position, in which it enables a radial movement of the blocking element (20) towards a retracted release position in which it allows the uncoupling of the terminal (5) from the main body (8); and
- a shoulder position, in which it defines a radial stop for the blocking element (20) so as to constrain it in an advanced abutment position in which it holds the terminal (5) in said retracted safety position, preventing the uncoupling thereof from the main body (8) ;
said radial shoulder element (24) being operatively coupled to said drive means (17), so that when the drive means (17) are axially displaced in the operative release position, the radial shoulder element (24) is displaced in the shoulder position.

7. The grabbing member as claimed in any one of the preceding claims, wherein said blocking element (20) is made of plastic material, preferably a polymer, even more preferably a thermoplastic polymer.

8. The grabbing member as claimed in any one of the preceding claims, wherein the second stopping means comprise two said blocking elements (20) radially opposite to one another and each configured to interact with said terminal (5) in said retracted safety position.

9. The grabbing member as claimed in any one of the claims 1 to 7, wherein said second stopping means comprise a plurality of said blocking elements (20) angularly spaced equally from one another around said longitudinal axis (A) and configured to interact with said terminal (5) in said retracted safety position.

10. A quick-coupling safety joint (1) configured to fluidly connect a first delivery duct (2) for delivering a pressurised operative fluid, to a second delivery duct (3) for delivering said pressurised operative fluid and comprising:
- a grabbing member (4) as claimed in any one of the preceding claims and configured to be connected to the first delivery duct (2); and
- a terminal (5) configured to be fixed to an end portion of the second delivery duct (3) and couplable in a releasable manner to said grabbing member (4) in an advanced coupling position to define a fluidic releasable connection between the first (2) and the second (3) delivery ducts.

## Patentansprüche

1. Greifelement (4), das eingerichtet ist, mit einem ersten Zufuhrkanal (2) zum Zuführen eines unter Druck stehenden Betriebsfluids verbunden zu sein und auf lösbare Weise mit einem Anschluss (5) eines zweiten Zufuhrkanals (3) zum Zuführen des unter Druck stehenden Betriebsfluids gekoppelt zu sein, um eine Schnellkopplungs-Sicherheitsverbindung (1) zu definieren, wobei das Greifelement (4) eine Längsachse (A) aufweist und umfasst:
- einen im Wesentlichen rohrförmigen, zur Längsachse (A) koaxialen Hauptkörper (8), der dazu geeignet ist, mit der ersten Leitung (2) verbunden zu sein und den Anschluss (5) in einer vorgeschobenen Kopplungsposition in lösbarer Weise axial aufzunehmen;
- ein Ventilelement (10), das axial gleitend im Inneren des Hauptkörpers (8) montiert ist und durch elastische Mittel (11) in einer geschlossenen Position gehalten wird, in der es den ersten Kanal (2) auf fluiddichte Weise gegenüber der Umgebung abdichtet, und das in eine offene Position verschiebbar ist, in der es den Ausfluss des unter Druck stehenden Betriebsfluids aus dem ersten Kanal (2) ermöglicht;
- erste lösbare Stoppmittel (13), die eingerichtet sind, den Anschluss (5) in der vorgeschobenen Kopplungsposition innerhalb des Hauptkörpers (8) festzuhalten, in der der Anschluss (5) eine Kraft auf das Ventilelement (10) ausübt, die der von dem elastischen Mittel (11) ausgeübten Kraft entgegengesetzt ist und diese überwiegt, um es in der offenen Position zu halten; und
- zweite lösbare Stoppmittel (20), die eingerichtet sind, mit dem Anschluss (5) zusammenzuwirken, um ihn nach dem Lösen der ersten Stoppmittel (13) und während des Abkoppelns des Anschlusses (5) vom Hauptkörper (8) in einer zurückgezogenen Sicherheitsposition zu halten, in der der Anschluss (5) mechanisch mit dem Hauptkörper (8) verbunden und vom Ventilelement (10) getrennt ist, um die Anordnung des Ventilelements (10) in der geschlossenen Position zu ermöglichen;
**wobei** die zweiten Stoppmittel mindestens ein Blockierelement (20) umfassen, das einen axialen Anschlag für den Anschluss (5) in der zurückgezogenen Sicherheitsposition definiert, **dadurch gekennzeichnet, dass** sich das mindestens eine Blockierelement (20) entlang einer Umfangsrichtung um die Längsachse (A) erstreckt, um ein bogenförmiges oder halbmondförmiges Profil zu definieren.

2. Greifelement nach Anspruch 1, wobei das Blockierelement (20) durch einen winkelförmigen, koaxial zur Längsachse (A) angeordneten Toroidabschnitt definiert ist.

3. Greifelement nach Anspruch 2, wobei der winkelförmige Toroidabschnitt in Bezug auf die radiale Richtung einen Querschnitt mit einem geschlossenen Umfang aufweist, der einen ersten C-förmigen Abschnitt (21) und einen zweiten C-förmigen Abschnitt (22) enthält, der radial weiter außen als der erste C-förmige Abschnitt (21) liegt; wobei der erste C-förmige Abschnitt (21) und der zweite C-förmige Abschnitt (22) an ihren jeweiligen freien Enden miteinander verbunden sind und jeweilige Konkavitäten aufweisen, die einander in der radialen Richtung gegenüberliegen.

4. Greifelement nach Anspruch 3, wobei die freien Endabschnitte des ersten C-förmigen Abschnitts (21) eine Öffnung aufweisen, die sich von der Öffnung der freien Endabschnitte des zweiten C-förmigen Abschnitts (22) in Bezug auf die axiale Richtung unterscheidet und insbesondere kleiner als diese ist.

5. Greifelement nach einem der vorhergehenden Ansprüche, das außerdem Antriebsmittel (17) umfasst, die entlang der Längsachse (A) in einer wirksamen Freigabeposition verschiebbar sind, in der sie die Freigabe der ersten Stoppmittel (13) bestimmen und gleichzeitig eine radiale Bewegung des Blockierelements (20) verhindern, um es in der zurückgezogenen Sicherheitsposition in Anlage gegen den von den ersten Stoppmitteln (13) freigegebenen Anschluss (5) zu zwingen.

6. Greifelement nach Anspruch 5, ferner ein radiales Schulterelement (24) für das Blockierelement (20) umfassend, das verschiebbar ist zwischen:
- einer Ruheposition, in der es eine radiale Bewegung des Blockierelements (20) zu einer zurückgezogenen Freigabeposition hin ermöglicht, in der es das Abkoppeln des Anschlusses (5) vom Hauptkörper (8) erlaubt; und
- eine Schulterposition, in der es einen radialen Stopp für das Blockierelement (20) definiert, um es in eine vorgeschobene Anschlagposition zu zwingen, in der es den Anschluss (5) in der zurückgezogenen Sicherheitsposition hält und sein Abkoppeln vom Hauptkörper (8) verhindert;
wobei das radiale Schulterelement (24) mit den Antriebsmitteln (17) wirkgekoppelt ist, so dass, wenn die Antriebsmittel (17) axial in die wirksame Freigabeposition verschoben werden, das radiale Schulterelement (24) in die Schulterposition verschoben wird.

7. Greifelement nach einem der vorhergehenden Ansprüche, wobei das Blockierelement (20) aus Kunststoff, vorzugsweise aus einem Polymer, noch bevorzugter aus einem thermoplastischen Polymer, hergestellt ist.

8. Greifelement nach einem der vorhergehenden Ansprüche, wobei die zweiten Stoppmittel zwei Blockierelemente (20) umfassen, die einander radial gegenüberliegen und jeweils eingerichtet sind, in der zurückgezogenen Sicherheitsposition mit dem Anschluss (5) zusammenzuwirken.

9. Greifelement nach einem der Ansprüche 1 bis 7, wobei die zweiten Stoppmittel mehrere Blockierelemente (20) umfassen, die um die Längsachse (A) winkelmäßig gleichmäßig voneinander beabstandet und eingerichtet sind, in der zurückgezogenen Sicherheitsposition mit dem Anschluss (5) zusammenzuwirken.

10. Schnellkopplungs-Sicherheitsverbindung (1), die eingerichtet ist, um einen ersten Zufuhrkanal (2) zum Zuführen eines unter Druck stehenden Betriebsfluids mit einem zweiten Zufuhrkanal (3) zum Zuführen des unter Druck stehenden Betriebsfluids in Fluidverbindung zu bringen, und umfassend:
- ein Greifelement (4) nach einem der vorhergehenden Ansprüche, das eingerichtet ist, mit dem ersten Zufuhrkanal (2) verbunden zu sein; und
- einen Anschluss (5), der eingerichtet ist, an einem Endabschnitt des zweiten Zufuhrkanals (3) befestigt zu sein und in einer vorgeschobenen Kopplungsposition auf lösbare Weise mit dem Greifelement (4) koppelbar zu sein, um eine lösbare Fluidverbindung zwischen dem ersten (2) und dem zweiten (3) Zufuhrkanal zu definieren.

## Revendications

1. Organe de préhension (4) configuré pour être relié à un premier conduit de distribution (2) pour distribuer un fluide fonctionnel pressurisé et pour se coupler d'une manière libérable à une borne (5) d'un second conduit de distribution (3) pour distribuer ledit fluide fonctionnel pressurisé, de manière à définir un raccord de sécurité à couplage rapide (1), ledit organe de préhension (4) comportant un axe longitudinal (A) et comprenant :
- un corps principal (8), sensiblement tubulaire, coaxial à l'axe longitudinal (A), apte à être relié audit premier conduit (2) et à recevoir axialement, en couplage libérable, ladite borne (5) dans une position de couplage avancée ;
- un élément de vanne (10) monté axialement en coulissant à l'intérieur du corps principal (8), maintenu par des moyens élastiques (11) dans une position fermée, dans laquelle il scelle le premier conduit (2) d'une manière étanche au fluide par rapport à l'environnement environnant, et déplaçable dans une position ouverte, dans laquelle il permet l'écoulement de sortie dudit fluide fonctionnel pressurisé depuis ledit premier conduit (2) ;
- des premiers moyens d'arrêt (13) libérables configurés pour contraindre la borne (5) dans ladite position de couplage avancée à l'intérieur du corps principal (8), dans lequel la borne (5) exerce une force opposée et prédominante par rapport à la force exercée par les moyens élastiques (11), sur ledit élément de vanne (10) pour le maintenir dans la position ouverte ; et
- des seconds moyens d'arrêt libérables (20) configurés pour coopérer avec la borne (5) pour la maintenir, après la libération des premiers moyens d'arrêt (13) et pendant le découplage de la borne (5) du corps principal (8), dans une position de sécurité rétractée, dans laquelle la borne (5) est reliée mécaniquement au corps principal (8) et est séparée de l'élément de vanne (10) pour permettre l'agencement de l'élément de vanne (10) dans la position fermée ;
dans lequel les seconds moyens d'arrêt comprennent au moins un élément de blocage (20) définissant une butée axiale pour la borne (5) dans ladite position de sécurité rétractée, **caractérisé en ce que** l'au moins un élément de blocage (20) s'étend le long d'une direction circonférentielle autour dudit axe longitudinal (A) de manière à définir un profil en forme d'arc ou en forme de demi-lune.

2. Organe de préhension selon la revendication 1, dans lequel ledit élément de blocage (20) est défini par une partie toroïdale angulaire agencée coaxiale audit axe longitudinal (A).

3. Organe de préhension selon la revendication 2, dans lequel ladite partie toroïdale angulaire présente une coupe transversale, par rapport à la direction radiale, présentant un périmètre en ligne fermée incluant une première partie en forme de C (21) et une seconde partie en forme de C (22) radialement plus à l'extérieur que la première partie en forme de C (21) ; la première partie en forme de C (21) et la seconde partie en forme de C (22) étant reliées l'une à l'autre aux extrémités libres respectives de celles-ci et présentant des concavités respectives orientées l'une vers l'autre dans la direction radiale.

4. Organe de préhension selon la revendication 3, dans lequel les parties d'extrémités libres de la première partie en forme de C (21) présentent une ouverture différente de, en particulier plus petite que, l'ouverture des parties d'extrémités libres de la seconde partie en forme de C (22), par rapport à la direction axiale.

5. Organe de préhension selon l'une quelconque des revendications précédentes, comprenant en outre des moyens d'entraînement (17) déplaçables le long dudit axe longitudinal (A) dans une position de libération fonctionnelle, dans laquelle ils déterminent la libération des premiers moyens d'arrêt (13) et empêchent, en même temps, un mouvement radial de l'élément de blocage (20) pour le contraindre en butée contre la borne (5) libérée par les premiers moyens d'arrêt (13) dans la position de sécurité rétractée.

6. Organe de préhension selon la revendication 5, comprenant en outre un élément d'épaulement radial (24) pour l'élément de blocage (20) déplaçable entre :
- une position de repos, dans laquelle il permet un mouvement radial de l'élément de blocage (20) vers une position de libération rétractée dans laquelle il autorise le découplage de la borne (5) du corps principal (8) ; et
- une position d'épaulement, dans laquelle il définit un arrêt radial pour l'élément de blocage (20) de manière à le contraindre dans une position de butée avancée dans laquelle il maintient la borne (5) dans ladite position de sécurité rétractée, en empêchant le découplage de celle-ci du corps principal (8) ;
ledit élément d'épaulement radial (24) étant couplé fonctionnellement auxdits moyens d'entraînement (17), de sorte que, lorsque les moyens d'entraînement (17) sont déplacés axialement dans la position de libération fonctionnelle, l'élément d'épaulement radial (24) est déplacé dans la position d'épaulement.

7. Organe de préhension selon l'une quelconque des revendications précédentes, dans lequel ledit élément de blocage (20) est constitué d'une matière plastique, de préférence un polymère, avec encore plus de préférence un polymère thermoplastique.

8. Organe de préhension selon l'une quelconque des revendications précédentes, dans lequel les seconds moyens d'arrêt comprennent deux dits éléments de blocage (20) opposés radialement l'un à l'autre et configurés chacun pour interagir avec ladite borne (5) dans ladite position de sécurité rétractée.

9. Organe de préhension selon l'une quelconque des revendications 1 à 7, dans lequel lesdits seconds moyens d'arrêt comprennent une pluralité desdits éléments de blocage (20) équidistants angulairement les uns des autres autour dudit axe longitudinal (A) et configurés pour interagir avec ladite borne (5) dans ladite position de sécurité rétractée.

10. Raccord de sécurité à couplage rapide (1) configuré pour relier fluidiquement un premier conduit de distribution (2) pour distribuer un fluide fonctionnel pressurisé, à un second conduit de distribution (3) pour distribuer ledit fluide fonctionnel pressurisé et comprenant :
- un organe de préhension (4) selon l'une quelconque des revendications précédentes et configuré pour être relié au premier conduit de distribution (2) ; et
- une borne (5) configurée pour être fixée à une partie d'extrémité du second conduit de distribution (3) et pouvant être couplée d'une manière libérable audit organe de préhension (4) dans une position de couplage avancée pour définir une liaison libérable fluidique entre le premier conduit de distribution (2) et le second conduit de distribution (3).
